# EUROPÄISCHE PATENTSCHRIFT

(11) **EP 0 790 104 B1**
(45) Veröffentlichungstag und Bekanntmachung des Hinweises auf die Patenterteilung: **03.05.2000**
(21) Anmeldenummer: 97810006.3
(22) Anmeldetag: 08.01.1997
(51) Int. Cl.: B25C 1/18

(54) **Nagelstreifen für pulverkraftbetriebene Setzgeräte**
Nail carrier strip for powder actuated fastening tool
Bande de support de clous pour appareils de scellement à poudre

(30) Priorität: 26.01.1996 DE 19602789
(43) Veröffentlichungstag der Anmeldung: 20.08.1997
(73) Patentinhaber: HILTI Aktiengesellschaft, 9494 Schaan (LI)
(72) Erfinder: Hentges, Gey, 91940 Gometz. fe Chatel (FR); Büchel, Johann, 9475 Sevelen (CH); Keckeis, Volker, 6832 Röthis (AT)
(74) Vertreter: Wildi, Roland

(56) Entgegenhaltungen:
- EP-A- 0 330 953
- WO-A-93/09918
- WO-A-95/09705
- DE-A- 3 806 713
- FR-A- 2 628 021
- US-A- 2 784 405
- US-A- 3 775 791
- US-A- 4 581 964

## Beschreibung

Die Erfindung betrifft einen Trägerstreifen für pulverkraftbetriebene Setzgeräte mit hintereinander angeordneten, der Aufnahme von Nägel dienenden, hohlzylinderförmigen, über flexible Stege miteinander verbundenen Aufnahmekammem, die zwischen zwei parallel zueinander und parallel zur Längsachse der Aufnahmekammem verlaufenden Seitenwänden angeordnet sind.

Ein im Handel erhältlicher Trägerstreifen für pulverkraftbetriebene Setzgeräte mit der Bezeichnung ENP 2-21 L 15 ist aus dem Produktekatalog "Systemlösungen für den Bau 1993/94" der Fa. Hiltl/Liechtenstein bekannt. Dieser bekannte Trägerstreifen weist mehrere hintereinander angeordnete, hohlzylinderförmige Aufnahmekammem auf, die der Aufname von Nägeln dienen. Jeweils zwei Aufnahmekammem sind über einen im Bereich der gemeinsamen Mittelachse aller Aufnahmekammem angeordneten flexiblen Steg und zwei parallel zueinander verlaufenden Seitenwände miteinander verbunden. Diese Seitenwände erstrecken sich seitlich entlang des Trägerstreifens und verlaufen parallel zur Längsachse der Aufnahmekammem.

Die Aufnahmekammem dienen der Aufnahme von Nägeln, die mit dem pulverkraft-betriebenen Setzgerät in einen Untergrund eintreibbar sind. Die in dem Trägerstreifen einsetzbaren Nägel weisen zwei voneinander beabstandete Führungsscheiben auf, die reibschlüssig mit dem Schaft verbunden sind und sich radial mit ihrer Aussenkontur an der Innenwandung der Aufnahmekammem abstützen.

Die Seitenwände des Trägerstreifens weisen an einer setzrichtungsseitigen Längskante zwischen den Aufnahmekammem angeordnete, parallel zur Längsachse der Aufnahmekammem verlaufende Vertiefungen auf. Im Verhältnis zu der parallel zur Längsachse der Aufnahmekammem gemessenen Höhe der Seitenwände ist die Tiefe der Vertiefung gering, so dass der Trägerstreifen sowohl gegenüber einer parallel zur Längsachse der Aufnahmekammem verlaufenden Ebene, als auch gegenüber einer senkrecht zur Längsachse der Aufnahmekammem verlaufenden Ebene eine sehr hohe Biegefestigkeit aufweist.

Der Erfindung liegt die Aufgabe zugrunde, einen Trägerstreifen der gattungsbildenden Bauart für pulverkraftbetriebene Setzgeräte zu schaffen, der in einer parallel zur Längsachse der Aufnahmekammem verlaufenden Ebene elastisch biegbar ist und gegenüber einer senkrecht zur Längsachse verlaufenden Ebene eine hohe Biegefestigkeit aufweist.

Erfindungsgemäss wird die Aufgabe dadurch gelöst, dass die Seitenwände im Bereich zwischen zwei Aufnahmekammem von Stegen gebildet sind, deren parallel zur Längsachse der Aufnahmekammem gemessene Höhe höchstens dem 0,3- bis 0,6-fachen der parallel zur Längsachse der Aufnahmekammem gemessenen Höhe der Seitenwände entspricht.

Durch die erfindungsgemässe Ausgestaltung der die Seitenwände im Bereich zwischen den Aufnahmekammem bildenden Stege wird ein Trägerstreifen geschaffen, der in einer parallel zur Längsachse der Aufnahmekammem verlaufenden Ebene elastisch biegbar ist und gegenüber einer senkrecht zur Längsachse verlaufenden Ebene eine hohe Biegefestigkeit aufweist. Aufgrund der parallel zur Längsachse der Aufnahmekammem gemessene Höhe, die dem 0,3- bis 0,6-fachen der parallel zur Längsachse der Aufnahmekammer gemessenen Höhe der Seitenwände entspricht, ist eine elastische Verformung der Seitenwände jeweils im Bereich zwischen den Aufnahmekammern möglich.

Ein mit einem pulverkraftbetriebenen Setzgerät zusammenwirkender Zuführkanal kann aufgrund des in einer Ebene elastisch biegbaren Trägerstreifens auch kurvenförmige Bereiche aufweisen, an die sich der Trägerstreifen beim Durchlaufen des Zuführkanals anpassen kann. Die Ausgestaltung von Zuführkanälen mit kurvenförmigen Bereichen ermöglicht die Schaffung von handlichen Setzgeräten mit geringer Baugrösse, die auch an schwer zugänglichen Stellen, bei denen ein geringer Platzbedarf herrscht, einsetzbar sind.

Über die Anordnung der Stege im Bereich der parallel zur Längsachse der Aufnahmekammern gemessenen Höhe ist die Lage der Biegeachse des Trägerstreifens beeinflussbar. Aus Gründen der Herstellung, der axialen Zug- und Druckfestigkeit sowie der Torsionsfestigkeit sind vorzugsweise die Stege im mittleren Bereich der parallel zur Längsachse der Aufnahmekammem gemessenen Höhe der Seitenwände angeordnet.

Zweckmässigerweise entspricht die Länge der Stege dem 0,3- bis 1-fachen der parallel zur Längsachse der Aufnahmekammem gemessenen Höhe der Seitenwände. Durch die Stege werden die Längskanten der Seitenwände unterbrochen, so dass sich beim Biegen des Trägerstreifens die Stege elastisch verformen, bis die einander gegenüberliegenden Längskanten einander berühren. Ist die Länge der Stege bzw. die Länge des Unterbruchs der Längskanten gross, so ist eine grosse Biegung des Trägerstreifens möglich. Ist hingegen die Länge der Stege bzw. die Länge des Unterbruchs der Längskanten klein, so ist nur eine klein Biegung des Trägerstreifens möglich.

Damit unterschiedliche Grade der Biegung in einer Ebene in zwei einander entgegengesetzte Richtungen erreicht werden kann, verkürzt sich vorteilhafterweise die Länge der Stege zu einer Längskante der Seitenwände hin.

Um eine grosse Biegung in Setzrichtung erreichen zu können verkürzt sich die Länge der Stege zu den setzrichtungsseitigen Längskanten der Seitenwände hin.

Die Erfindung wird anhand von Zeichnungen, die ein Ausführungsbeispiel wiedergeben näher erläutert. Es zeigen:
- Fig. 1: ein erfindungsgemässer Trägerstreifen in der Seitenansicht, teilweise geschnitten;
- Fig. 2: der Trägerstreifen gemäss Fig. 1 in der Draufsicht;
- Fig. 3: ein weiterer, erfindungsgemässer, nicht zur Gänze dargestellter Trägerstreifen, in der Seitenansicht.

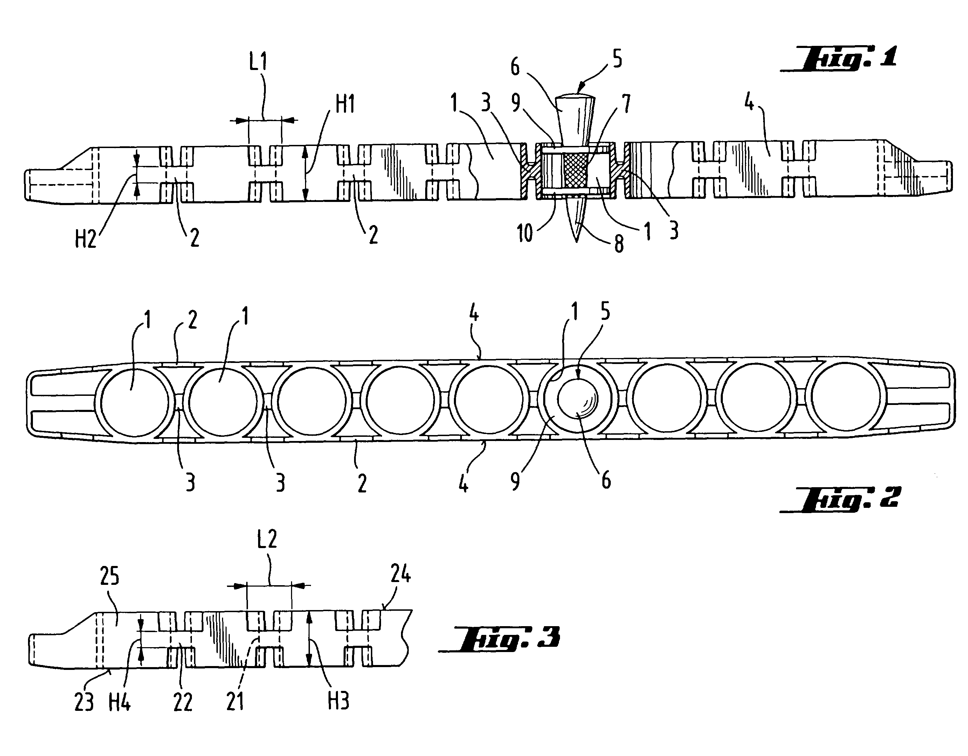

Der in den Fig. 1 und 2 dargestellte Trägerstreifen für pulverkraftbetriebene Setzgeräte weist mehrere hintereinander angeordnete, hohlzylinderförmige Aufnahmekammem 1 auf, die der Aufname von Nägel 5 dienen. Jeweils zwei Aufnahmekammem 1 sind über drei flexible Stege 2, 3 miteinander verbunden. Der mit 3 bezeichnete Steg ist jeweils im Bereich der gemeinsamen Mittelachse aller Aufnahmekammem 1 angeordnet und die mit 2 bezeichneten, parallel zueinander verlaufenden Stege sind Teile von parallel zueinander verlaufenden Seitenwänden 4. Diese Seitenwände erstrecken sich seitlich entlang des Trägerstreifens und verlaufen parallel zur Längsachse der Aufnahmekammem 1.
Die von den Stegen 2 gebildeten Bereiche der Seitenwände 4 weisen eine parallel zur Längsachse der Aufnahmekammem 1 gemessene Höhe H2 auf, die höchstens dem 0,3-bis höchstens dem 0,6-fachen der parallel zur Längsachse der Aufnahmekammem 1 gemessenen Höhe H1 der Seitenwände 4 entspricht.

Die Stege 2 sind im mittleren Bereich der Höhe H1 der Seitenwände 4 angeordnet und die sich parallel zur Längserstreckung der Seitenwände 4 erstreckende Länge L1 der Stege 2 entspricht dem 0,3- bis 1-fachen der Höhe H1 der Seitenwände. Gegenüber den Stegen 3 weisen die Stege 2 eine grössere Länge L1 auf.

In einer der Aufnahmekammem ist ein Nagel angeordnet, der sich aus einem Kopf 6, einem profilierten Schaft 7 und einer Spitze 8 zusammensetzt. Zwei voneinander beabstandete Führungsscheiben 9, 10 sind reibschlüssig mit dem Schaft 7 verbunden und stützen sich radial mit ihrer Aussenkontur an der Innenwandung der Aufnahmekammer ab. Mittels nicht dargestellter Anschlagflächen, beispielsweise in Form von Vorsprüngen, kann eine axiale Halterung der Führungsscheiben 9, 10 in der Aufnahmekammer 1 erreicht werden. Eine erste Führungsscheibe 9 befindet sich im Übergangsbereich zwischen Schaft 7 und Kopf 6. Die zweite Führungsscheibe 10 ist in einem der Spitze 8 naheliegenden Bereich des Schaftes 7 angeordnet.

Der in der Fig. 3 dargestellte Ausschnitt eines weiteren Trägerstreifens für pulverkraftbetriebene Setzgeräte weist mehrere hintereinander angeordnete, hohlzylinderförmige Aufnahmekammem 21 auf, die der Aufname von nicht dargestellten Nägeln dienen. Jeweils zwei Aufnahmekammem 21 sind über drei flexible Stege 22 miteinander verbunden. Ein ebenfalls nicht dargestellter Steg ist jeweils im Bereich der gemeinsamen Mittelachse aller Aufnahmekammem 21 angeordnet und die mit 22 bezeichneten, parallel zueinander verlaufenden Stege sind Teile von parallel zueinander verlaufenden Seitenwänden 25. Diese Seitenwände 25 erstrecken sich seitlich entlang des Trägerstreifens, verlaufen parallel zur Längsachse der Aufnahmekammem 21 und weisen jeweils zwei Längskanten 23, 24 auf. Eine erste Längskante 23 ist im setzrichtungsseitigen Bereich des Trägerstreifens angeordnet. Die zweite Längskante 24 liegt der Längskante 23 gegenüber.

Die Stege 22 sind im mittleren Bereich der Höhe H3 der Seitenwände 25 angeordnet und die sich parallel zur Längserstreckung der Seitenwände 25 erstreckende Länge L2 der Stege 22 verkürzt sich zu der setzrichtungsseitigen ersten Längskante 23 der Seitenwände 25 hin. Die Länge L2 der Stege entspricht dem 0,3- bis 1-fachen der Höhe H3 der Seitenwände 25.

## Patentansprüche

1. Trägerstreifen für pulverkraftbetriebene Setzgeräte mit hintereinander angeordneten, der Aufnahme von Nägeln (5) dienenden, hohlzylinderförmigen, über flexible Stege (2, 3, 22) miteinander verbundenen Aufnahmekammern (1, 21), die zwischen zwei parallel zueinander und parallel zur Längsachse der Aufnahmekammern (1, 21) verlaufenden Seitenwänden (4, 25) angeordnet sind, **dadurch gekennzeichnet**, dass die Seitenwände (4, 25) im Bereich zwischen zwei Aufnahmekammern (1, 21) von Stegen (2, 22) gebildet sind, deren parallel zur Längsachse der Aufnahmekammern (1, 21) gemessene Höhe (H2, H4) dem 0,3- bis 0,6-fachen der parallel zur Längsachse der Aufnahmekammern (1, 21) gemessenen Höhe (H1, H3) der Seitenwände (4, 25) entspricht.

2. Trägerstreifen nach Anspruch 1, dadurch gekennzeichnet, dass die Stege (2, 22) im mittleren Bereich der parallel zur Längsachse der Aufnahmekammern (1, 21) gemessenen Höhe (H1, H3) der Seitenwände (4, 25) angeordnet sind.

3. Trägerstreifen nach Anspruch 2, dadurch gekennzeichnet, dass die Länge (L1, L2). der Stege (2, 22) dem 0,3- bis 1-fachen der parallel zur Längsachse der Aufnahmekammern (1, 21) gemessenen Höhe (H1, H3) der Seitenwände (4, 25) entspricht.

4. Trägerstreifen nach einem der Ansprüche 1 bis 3, dadurch gekennzeichnet, dass sich die Länge (L2) der Stege (22) zu einer Längskante (23, 24) der Seitenwände (25) hin verkürzt.

5. Trägerstreifen nach Anspruch 4, dadurch gekennzeichnet, dass sich die Länge (L2) der Stege (22) zu den setzrichtungsseitigen Längskanten (23) der Seitenwände (25) hin verkürzt.

## Claims

1. Support strip for explosively actuated setting tools with hollow cylindrical accommodation chambers (1, 21), which are arranged one behind the other and serve to accommodate nails (5) and are joined together via flexible webs (2, 3) and which are arranged between two side walls (4, 25) which extend parallel to each other and parallel to the longitudinal axis of the accommodation chambers (1, 21), **characterised in that** the side walls (4, 25) are formed in the area between two accommodation chambers (1, 21) by webs (2, 22) the height (H2, H4) of which, as measured parallel to the longitudinal axis of the accommodation chambers (1, 21), corresponds with between 0.3 and 0.6 times the height (H1, H3) of the side walls (4, 25) as measured parallel to the longitudinal axis of the accommodation chambers (1, 21).

2. Support strip according to Claim 1, **characterised in that** the webs (2, 22) are arranged in the central area of the height (H1, H3) of the side walls (4, 25) as measured parallel to the longitudinal axis of the accommodation chambers (1, 21).

3. Support strip according to Claim 2, **characterised in that** the length (L1, L2) of the webs (2, 22) equals between 0.3 and 1 times the height (H1, H3) of the side walls (4, 25) as measured parallel to the longitudinal axis of the accommodation chambers (1, 21).

4. Support strip according to one of Claims 1 to 3, **characterised in that** the length (L2) of the webs (22) is shortened towards a longitudinal edge (23, 24) of the side walls (25).

5. Support strip according to Claim 4, **characterised in that** the length (L2) of the webs (22) shortens towards the longitudinal edges of the side walls (25) on the setting side.

## Revendications

1. Bande porteuse pour outils de scellement par explosif, comprenant des alvéoles de logement en forme de cylindres creux (1, 21) qui sont disposés les uns derrière les autres, qui servent à recevoir des clous (5), qui sont reliés entre eux par des barrettes souples (2, 3, 22) et qui sont disposés entre deux parois latérales (4, 25) s'étendant parallèlement l'une à l'autre et parallèlement à l'axe longitudinal des alvéoles de logement (1, 21), caractérisée en ce que, dans la zone située entre deux alvéoles de logement (1, 21), les parois latérales (4, 25) sont formées par des barrettes (2, 22) dont la hauteur (H2, H4) mesurée parallèlement à l'axe longitudinal des alvéoles de logement (1, 21) correspond à 0,3 à 0,6 fois la hauteur (H1, H3) des parois latérales (4, 25) mesurée parallèlement à l'axe longitudinal des alvéoles de logement (1, 21).

2. Bande porteuse selon la revendication 1, caractérisée en ce que les barrettes (2, 22) sont disposées dans la zone médiane de la hauteur (H1, H3) des parois latérales (4, 25) mesurée parallèlement à l'axe longitudinal des alvéoles de logement (1, 21).

3. Bande porteuse selon la revendication 2, caractérisée en ce que la longueur (L1, L2) des barrettes (2, 22) correspond à 0,3 à 1 fois la hauteur (H1, H3) des parois latérales (4, 25) mesurée parallèlement à l'axe longitudinal de alvéoles de logement (1, 21).

4. Bande porteuse selon l'une des revendications 1 à 3, caractérisée en ce que la longueur (L2) des barrettes (22) est raccourcie en direction d'un bord longitudinal (23, 24) des parois latérales (25).

5. Bande porteuse selon la revendication 4, caractérisée en ce que la longueur (L2) des barrettes (22) est raccourcie en direction des bords longitudinaux (23) des parois latérales (25) orientés dans le sens d'enfoncement.
